# EUROPÄISCHE PATENTANMELDUNG

(11) **EP 0 744 758 A2**
(43) Veröffentlichungstag der Anmeldung: **27.11.1996**
(21) Anmeldenummer: 96107629.6
(22) Anmeldetag: 14.05.1996
(51) Int. Cl.: H01H 33/00

(54) **Hochspannungsschalteinrichtung**

(30) Priorität: 20.05.1995 DE 19518635; 07.02.1996 DE 19604342
(71) Anmelder: ABB PATENT GmbH, D-68309 Mannheim (DE)
(72) Erfinder: Kopatz, Manfred, Dr., 67098 Bad Dürkheim (DE); Plettner, Horst, 63457 Hanau (DE); Spiess, Erich, 67125 Darmstadt (DE)
(74) Vertreter: Rupprecht, Klaus, Dipl.-Ing.

(57) **Zusammenfassung**

Die Erfindung betrifft eine ein- oder mehrpolige Hochspannungsschalteinrichtung mit einem rohrförmigen Gehäuse (20), an dessen Enden etwa quer zur Mittelachse des Gehäuses je Phase je eine Zu- und Ableitung (38, 39) vorgesehen ist, mit einem im rohrförmigen Gehäuse (20) untergebrachten ein- oder mehrpoligen Leistungsschalter (37), dessen Polenden mit je einer Ableitung (38, 39) elektrisch leitend verbunden sind und dessen bewegliche Kontaktstücke in der Mittelachse des Gehäuses (20) oder parallel dazu verlaufen, mit einem Trennschalter (29, 35) pro Phase und mit am Gehäuse (20) im Bereich von dessen Enden angeordneten, etwa quer dazu verlaufenden und die Ableitungen aufnehmenden Rohrstutzen (24, 25), um die herum je ein Stromwandler (31, 36) angeordnet ist, wobei an jedem Rohrstutzen (24, 25) je ein Rohrteilstück (28, 33) anschließt, in dem je ein Trennschalter (29, 35) und ggf. ein Erdungsschalter (35a) angeordnet ist, wobei im Bereich zwischen Rohrstutzen und Rohrteilstück ein Spannungswandler (31, 36) vorgesehen ist, und wobei am freien Ende jedes Rohrteilstückes (28, 33) je ein Kabelendverschluß (30, 34) angebracht ist.

## Beschreibung

Die Erfindung betrifft eine Hochspannungsschalteinrichtung nach dem Oberbegriff des Anspruches 1.

Eine derartige Hochspannungsschalteinrichtung ist aus dem Prospekt Chunghain SF₆ GAS CIRCUIT BREAKER & GAS COMBINED SWITCHGEAR, Seite 5, das der Anmelderin am 14. November 1994 zugegangen ist, bekannt geworden.

Diese bekannte Anordnung besitzt einen horizontal liegenden, metallischen SF₆-gas-gefüllten zylindrischen Behälter, der im Bereich seiner Enden quer dazu Stutzen aufweist, an die Kabeldurchführungen angeschlossen sind. Um die Stutzen sind Stromwandler gelegt.

Bei dieser Ausführung besitzt das Gehäuse bzw. der zylindrische Behälter senkrecht zur Behältermittelachse etwa in der Mitte zwischen den beiden Stutzen auf deren distal gegenüberliegenden Seite eine Zugangsöffnung, die von einem Stutzen umgeben ist, durch die die Antriebsstange eines Antriebes in den Behälter eingeführt ist. Die Antriebsstange ist mittels Umlenkhebeln mit den beweglichen Kontaktstücken gekuppelt, wobei innerhalb des Behälters zwei Hochspannungsschalter untergebracht sind. Hierbei wird die vertikale Bewegung in die horizontale Bewegung der Kontaktstücke umgewandelt.

Aus der US-A 5 128 502 ist ein dreipoliger Schalter der eingangs genannten Art bekannt geworden, bei dem jeweils in einem Gehäuse ein Pol untergebracht ist. Wo allerdings Erdungsschalter oder Trennschalter vorgesehen sind, ist nicht beschrieben.

Aufgabe der Erfindung ist es, eine Hochspannungsschalteinrichtung der eingangs genannten Art zu schaffen, bei der alle wesentlichen Komponenten einer Schalteinrichtung, Leistungsschalter, Trennschalter, ggf. Erdungsschalter und Stromwandler vorhanden sind.

Diese Aufgabe wird erfindungsgemäß gelöst durch die kennzeichnenden Merkmale des Anspruches 1.

Erfindungsgemäß also schließen an jedem Rohrstutzen Rohrteilstücke an, in denen je ein Trennschalter und ein Erdungsschalter angeordnet sind, wobei im Bereich zwischen dem Rohrstutzen und dem Rohrteilstück ein Spannungswandler vorgesehen ist. Am freien Ende jedes Rohrteilstückes ist jeweils ein Kabelendverschluß angebracht. Das Gehäuse enthält dabei lediglich einen Leistungsschalter, dessen bewegliches Kontaktstück über eine Antriebsstange mit einem Antrieb verbunden ist, der an einer Stirnseite des Gehäuses angeordnet ist. Die Antriebsstange durchgreift dabei die stirnseitige Öffnung des Gehäuses. An der entgegengesetztliegenden Stirnseite befindet sich ein Montagedeckel.

Wenn hiermit ein dreipoliger Schalter gebildet wird, dann ist jedem Pol bzw. jeder Phase ein Gehäuse zugeordnet und bei drei Phasen sind die Gehäuse jeder Phase nebeneinander auf einem Gestell befestigt. Die Ableitungen und damit die Rohrstutzen der mittleren Phase sind in einer vertikalen Ebene angeordnet und die der anderen beidseitig dazu befindlichen Gehäuse sind so diesem mittleren Gehäuse zugeordnet, daß die Ableitungen, Rohrstutzen und Kabelendverschlüsse, untereinander einen spitzen (in Richtung vom Gestell weg betrachtet), nach oben hin offenen Winkel bilden, wobei die Winkel der Ableitungen mit der mittleren Vertikalen jeweils gleich sind.

Es besteht darüberhinaus auch die Möglichkeit, daß in einem einzigen Gehäuse alle drei Pole des Leistungsschalters untergebracht sind, wie im Anspruch 4 angegeben. Dann sind die Ableitungen der mittleren Phase in einer vertikalen Ebene und die der anderen beidseitig dazu angeordnet und nehmen untereinander einen spitzen, in Richtung vom Gestell weg betrachtet, nach oben offenen Winkel ein. Die Ableitungen sind dann an dem alle Pole aufnehmenden Gehäuse angebracht.

Die Leistungsschalterpole können in einer Ebene im Gehäuse untergebracht sein; das Gehäuse kann dabei zylinderförmig oder an die nebeneinanderliegenden Leistungsschalterpole angepaßt im Querschnitt oval sein.

Es besteht auch die Möglichkeit, daß die Leistungsschalterpole an den Ecken eines Dreieckes angeordnet sind. In diesem Falle ist das Gehäuse zylindrisch.

In bevorzugter Weise ist das Gehäuse in seiner Mitte zweigeteilt, wobei der Trennflansch mittig zwischen den Ableitungen liegt.

Jedes Gehäuse kann zusätzlich an einem Stirnende je einen Montagedeckel aufweisen und am entgegengesetzten Ende einen Antrieb. Dabei besteht die Möglichkeit, daß bei einer dreipoligen Anordnung alle drei Pole gleichzeitig von einem einzigen Antrieb betätigt werden; es besteht auch die Möglichkeit, daß für jeden einzelnen Pol ein eigener Antrieb vorgesehen ist. In letzterem Falle könnte die Ansteuerung der Antriebe so erfolgen, daß jeder Leistungsschalterpol in seinem Stromnulldurchgang geschaltet wird.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Vorderansicht auf eine erfindungsgemäße Hochspannungsschalteinrichtung, und
- Fig. 2: eine Schnittansicht gemäß der Schnittlinie II-II der Fig. 1.

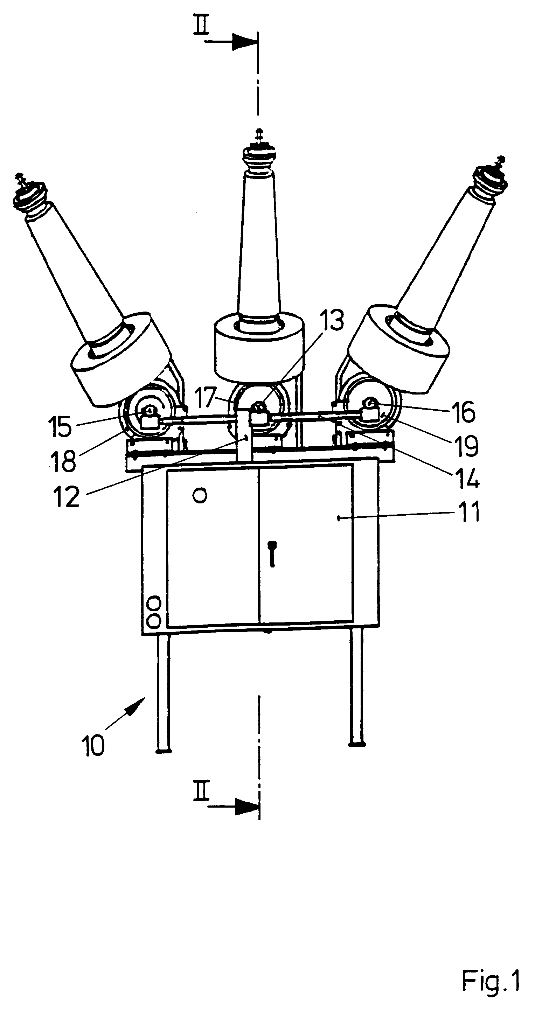

Eine Hochspannungsschalteinrichtung gemäß Fig. 1 umfaßt ein Gestell 10, an dessen vorderem Ende ein Steuerschrank 11 angebracht ist, in dem auch ein Antrieb enthalten ist, dessen Antriebsstange 12 oben aus dem Steuerschrank herausragt und über ein Umlenkgetriebe (nicht näher dargestellt) die lineare Bewegung auf eine Torsionsachse 14 überträgt, die praktisch die gesamte Vorderfront (siehe Fig. 1) der Hochspannungsschalteinrichtung überdeckt. Die Torsionsachse 14 oder Torsionswelle 14 ist mit weiteren Umlenkgetrieben jeweils mit den Antriebsstangen 13, 15 und 16 von Hochspannungsleistungsschalterpolen 17, 18 und 19 gekuppelt.

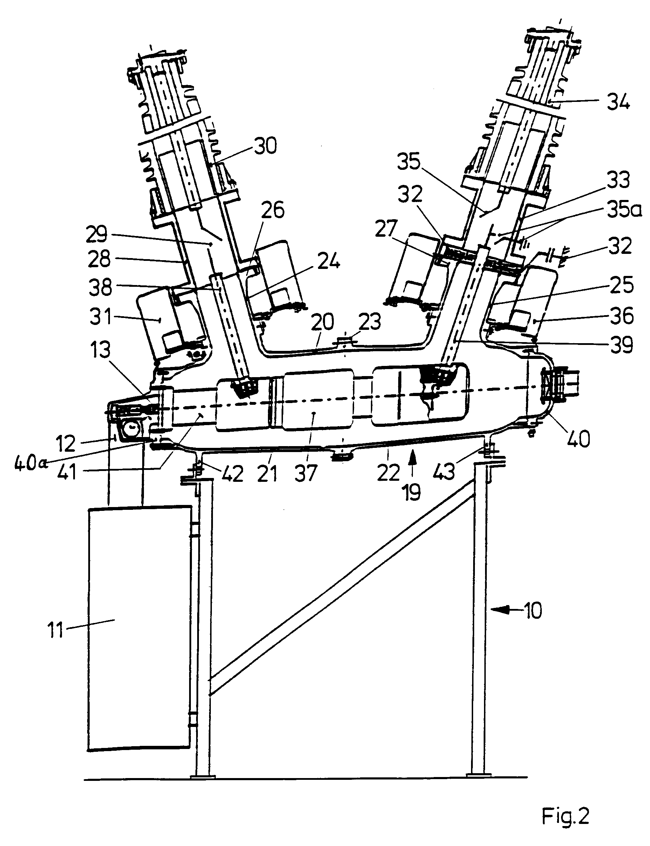

Die Fig. 2 zeigt im Schnitt den Hochspannungsleistungsschalterpol 17.

Dieser Hochspannungsleistungsschalterpol 17 besitzt ein rohrförmiges Gehäuse 20, das aus zwei rohrförmigen Teilgehäusen 21 und 22 zusammengesetzt ist, die im mittleren Bereich mittels einer Flanschverbindung 23 miteinander verbunden sind. Im Bereich der Enden besitzt das Gehäuse 20 jeweils einen Stutzen 24 und 25, die am Gehäuse 20 angeformt sind und die miteinander einen nach oben hin offenen spitzen Winkel bilden. Die Rohrstutzen 24 und 25 enden jeweils in einem Flansch 26 und 27. Am Flansch 26 ist ein Rohrteilstück 28 angeschlossen, in dem sich ein Trennschalter 29 befindet; an dem Rohrstück 28 schließt eine Freiluftdurchführung 30 an. Der Rohrstutzen 24 ist von einem Stromwandler 31 umgeben.

An dem Flansch 27 des Rohrstutzens 25 schließt ein kapazitiver Spannungswandler 32 an, an den selbst wiederum ein Rohrstück 33 anschließt, wobei dieses Rohrstück gegenüber dem Rohrstück 28 um das axiale Maß des Spannungswandlers 32 verkürzt ist. Am Rohrstück 33 schließt eine Freiluftdurchführung 34 an. Innerhalb des Rohrstückes 33 befindet sich ein weiterer Trennschalter 35 sowie vor dem Trennschalter, also zum Gehäuse 20 hin ein Erdungsschalter 35a. Auch der Rohrstutzen 25 ist von einem Stromwandler 36 umgeben.

Innerhalb des Gehäuses 20 befindet sich ein Hochspannungsleistungsschalter 37, dessen Enden mit Abgangsleitern 38 und 39 versehen sind, die koaxial zu den Rohrstutzen 24 und 25, diese durchgreifend ausgerichtet sind.

Der Antrieb des Leistungsschalters 37 erfolgt über die Antriebsstange 13 an dem in Fig. 2 links dargestellten Ende; das antriebsseitige Ende des Gehäuses 20 ist dabei mit einem Deckel 40a und das andere stirnseitige antriebsabseitige Ende mit einem Abschluß- oder Montagedeckel 40 verschlossen.

Es besteht auch die Möglichkeit, anstatt eines mittig geteilten Gehäuses 20 auch ein ungeteiltes zu verwenden.

Das Gehäuse 20 zusammen mit den daran angeformten Rohrstutzen 24 und 25 besteht aus Metall und ist mit SF₆-Gas gefüllt. Der Leistungsschalter 37 ist im Inneren des Gehäuses mittels eines Tragzylinders 41 aus isolierendem Material am linken Stirnende des Gehäuses 20 fixiert.

An der Unterseite des Gehäuses, also an der zu den Rohrstutzen 24 und 25 distalen Mantellinie sind Laschen 42 und 43 am Gehäuse 20 angeformt, mit denen das Gehäuse 20 an dem Gestell 10 fixiert werden kann.

Die Erfindung ist beschrieben in einer Ausführung, bei der jeder einzelne Pol in jeweils einem einzigen Gehäuse untergebracht ist. Es besteht natürlich auch die Möglichkeit, anstatt dreier Gehäuse ein einziges vorzusehen und in gleicher Weise die Ableitungen an dem Gehäuse anzuordnen. Alle übrigen Merkmale können in angepaßter Weise gleichartig ausgebildet sein.

## Patentansprüche

1. Ein- oder mehrpolige Hochspannungsschalteinrichtung, mit einem rohrförmigen Gehäuse, an dessen Enden etwa quer zur Mittelachse des Gehäuses je Phase je eine Zu- und Ableitung vorgesehen ist, mit einem im rohrförmigen Gehäuse untergebrachten ein- oder mehrpoligen Leistungsschalter, dessen Polenden mit je einer Ableitung elektrisch leitend verbunden sind und dessen bewegliche Kontaktstücke in der Mittelachse des Gehäuses oder parallel dazu verlaufen, mit einem Trennschalter pro Phase und mit am Gehäuse im Bereich von dessen Enden angeordneten, etwa quer dazu verlaufenden und die Ableitungen aufnehmenden Rohrstutzen, um die herum je ein Stromwandler angeordnet ist, dadurch gekennzeichnet, daß an jedem Rohrstutzen (24, 25) je ein Rohrteilstück (28, 33) anschließt, in dem je ein Trennschalter (29, 35) und ggf. ein Erdungsschalter (35a) angeordnet sind, wobei im Bereich zwischen einem der Rohrstutzen (24, 25) und den anschließenden Rohrteilstücken (28, 33) je ein Stromwandler (31, 36) vorgesehen ist, daß zwischen den Rohrstutzen (25, 33) ein Spannungswandler (32) vorgesehen ist, und daß am freien Ende jedes Rohrteilstükkes (28, 33) je ein Kabelendverschluß (30, 34) angebracht ist.

2. Hochspannungsschalteinrichtung nach Anspruch 1, dadurch gekennzeichnet, daß die Zu- und Ableitungen (38, 39) einen spitzen Winkel zwischen sich einschließen, der in Richtung vom Leistungsschalter (37) weg geöffnet ist.

3. Dreipolige Hochspannungsschalteinrichtung nach Anspruch 1 oder 2, dadurch gekennzeichnet, daß jeweils ein Gehäuse (17, 18, 19) je einer Phase zugeordnet ist, daß bei drei Phasen die Gehäuse nebeneinander auf einem Gestell (10) befestigt sind und daß die Ableitungen (38, 39) der mittleren Phase in einer vertikalen Ebene und die der anderen beidseitig dazu angeordnet sind und untereinander einen spitzen, in Richtung vom Gestell weg betrachtet, nach oben offenen Winkel bilden.

4. Dreipolige Hochspannungsschalteinrichtung nach Anspruch 1 oder 2, dadurch gekennzeichnet, daß die Ableitungen (38, 39) der mittleren Phase in einer vertikalen Ebene und die der anderen beidseitig dazu angeordnet sind und untereinander einen spitzen, in Richtung vom Gestell weg betrachtet, nach oben offenen Winkel bilden und an einem alle Phasen aufnehmenden Gehäuse angebracht sind.

5. Hochspannungsschalteinrichtung nach Anspruch 4, dadurch gekennzeichnet, daß die Leistungsschalterpole in einer Ebene im Gehäuse untergebracht sind.

6. Hochspannungsschalteinrichtung nach Anspruch 5, dadurch gekennzeichnet, daß das Gehäuse im Querschnitt oval ist.

7. Hochspannungsschalteinrichtung nach Anspruch 4, dadurch gekennzeichnet, daß die Leistungsschalterpole an den Ecken eines Dreieckes angeordnet sind.

8. Hochspannungsschalteinrichtung nach Anspruch 5 oder 7, dadurch gekennzeichnet, daß das Gehäuse zylindrisch ist.

9. Hochspannungsschalteinrichtung nach einem der vorherigen Ansprüche, dadurch gekennzeichnet, daß das Gehäuse (20) zweigeteilt ist, wobei der Trennflansch (23) mittig zwischen den Ableitungen (38, 39) liegt.

10. Hochspannungsschalteinrichtung nach einem der vorherigen Ansprüche, dadurch gekennzeichnet, daß jedes Gehäuse (21, 22) zusätzlich an einem Stirnende je einen Montagedeckel (40, 41) aufweist.

11. Hochspannungsschalteinrichtung nach Anspruch 10, dadurch gekennzeichnet, daß am dem Montagedeckel (40) entgegengesetzten Ende des Gehäuses oder der Gehäuse ein Antrieb (11, 12; 13, 14, 15, 16) angeordnet ist.

12. Hochspannungsschalteinrichtung nach Anspruch 11, dadurch gekennzeichnet, daß für jeden Pol ein eigener Antrieb vorgesehen ist.
